Europäisches Patentamt

(19) European Patent Office

Office européen des brevets

(11) Publication number: **0 167 176**
**B1**

(12) **EUROPEAN PATENT SPECIFICATION**

(45) Date of publication of patent specification: 03.10.90

(51) Int. Cl.⁵: **H 01 K 1/50**

(21) Application number: 85108385.7

(22) Date of filing: 05.07.85

(54) Tungsten halogen lamp with hydrogen fluoride.

(30) Priority: 06.07.84 US 628365

(43) Date of publication of application:
08.01.86 Bulletin 86/02

(45) Publication of the grant of the patent:
03.10.90 Bulletin 90/40

(84) Designated Contracting States:
BE DE FR GB NL

(56) References cited:
EP-A-0 084 839
EP-A-0 115 392
GB-A-1 195 109
US-A-4 256 988

JOURNAL OF APPLIED PHYSICS, vol. 48, no. 7,
July 1977, pages 3089-3092, American Institute
of Physics, New York, US; J.C. HILL et al.:
"Fluorine-cycle incandescent lamps"

(73) Proprietor: GTE Products Corporation
100 West 10th Street
Wilmington, DE 19801 (US)

(72) Inventor: Beschle, Mark D.
130 Pine Street
Danvers, Mass. 01923 (US)

(74) Representative: Lemke, Jörg-Michael, Dipl.-Ing.
Oberländerstrasse 16a
D-8900 Augsburg (DE)

Courier Press, Leamington Spa, England.

# Description

This invention relates to incandescent lamps and more particularly to tungsten halogen lamps.

Incandescent lamps exhibiting the so called halogen cycle are well known. Such lamps operate on a tungsten-halogen cycle which is a regenerative, continuous process in which tungsten halide is produced when the halide combines chemically with particles of tungsten evaporating from an incandescent tungsten filament. Subsequent thermal decomposition of this compound replaces the tungsten particles on the filament. This process keeps the tungsten particles from depositing on the lamp envelope and producing a black coating which reduces light output.

For many years the preferred halide employed was iodine. Some years ago it was recognized that the use of bromine in place of iodine had beneficial effects, such as increased efficacy, and this substitution was indeed made, and bromine is now extensively used. See, for example, EP—A—0,084,839 (US—A—4,453,107).

It is also known that a halogen cycle based on fluorine or its compounds differs from those based on bromine or the other halogens in that, with fluorine, evaporated tungsten is redeposited back into the filament at a rate that increases with filament temperature. This is because of the relatively greater thermal stability of tungsten fluoride as compared to the other tungsten halides. In effect, the fluorine cycle renders the filament much more stable because the hot spots, areas of uneven excessive heating on the filament which are more prone to evaporation, are also significantly more effective in thermally breaking down tungsten fluoride and thereby depositing tungsten back onto the filament. In practice, it is found that, at hot spots, tungsten deposition occurs at a higher rate than does evaporation, and the net effect is for a fluorine cycle lamp to continually repair its filament.

The attractiveness of the fluorine cycle in incandescent lamps is offset by the greater reactivity of fluorine compounds and the technical difficulty of providing a lamp vessel and lead-in wires that are resistant to fluorine attack. US—A—4,256,988, e.g., addresses this problem by suggesting that the interior of the lamp envelope and the external surfaces of the internal components be provided with a continuous imperforate coating of a metal oxide resistant to halogen attack. This solution adds greatly to the cost of the lamp.

EP—A—0,115,392, which is a prior art falling within the terms of Article 54(3) EPC, describes a tungsten halogen incandescent lamp having a fill gas comprising a halogen, an inert gas and hydrogen gas. Moreover it has been pointed out that fluorine, chlorine or bromine improve the lamp life and that the addition of hydrogen can assist in preventing corrosion of the metallic members in the lamp. See also GB—A—1,195,109.

## Disclosure of the Invention

It is, therefore, an object of the invention to obviate the disadvantages of the prior art.

It is another object of the invention to enhance the operation of tungsten-halogen lamps.

These objects are accomplished, in one aspect of the invention, by the provision of a sealed incandescent lamp according to claim 1.

It is believed the presence of excess hydrogen inhibits the activity of the fluorine.

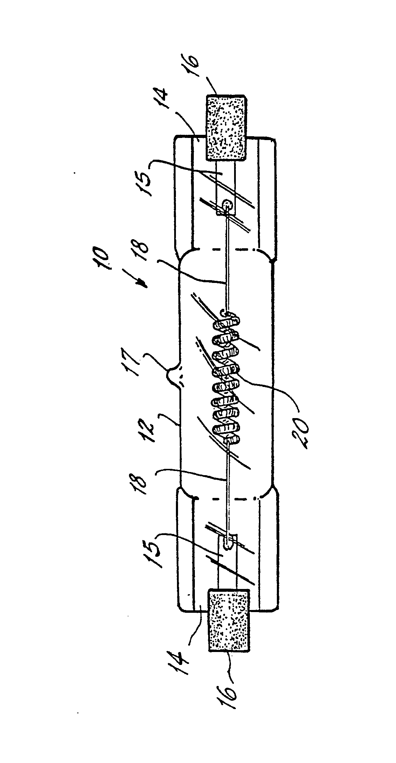

The single figure illustrates the lamp which can employ the invention.

For a better understanding of the present invention, together with other and further objects, advantages, and capabilities thereof, reference is made to the following disclosure and appended claims in connection with the accompanying drawing.

Referring now to the drawing with greater particularity, there is shown in the figure a lamp 10 comprising a tubular envelope 12 of hard glass, e.g., an aluminosilicate or borosilicate material. The envelope has flattened end portions 14, 14 through each of which a molybdenum ribbon 15 is sealed as a lead-in conductor. Wires not shown extend from the outside ends of the ribbons 15 to contact caps 16, 16. Tungsten wires 18, 18 extend from the inner ends of ribbons 15 to inside the envelope and support tungsten filament 20.

The envelope 12 has the customary sealed exhaust tube 17 and contains a fill gas at a cold lamp pressure of 2 to 4 atmospheres; and preferably, $2\frac{1}{2}$ to 3 atmospheres.

In this embodiment the fill gas comprises gaseous hydrogen fluoride (HF) in an amount of from about 0.1 to 2.0 mole percent; gaseous nitrogen ($N_2$) in an amount of from about 2 to 4 mole percent; gaseous hydrogen ($H_2$) in an amount of from greater than 0 (>0) to 2 mole percent and the balance selected from argon or krypton.

In an alternate embodiment, the fill can include an amount of greater than zero (>0) to 0.2 mole percent of phosphine ($PH_3$) to act as an oxygen getter.

Lamps constructed with the above-described fill gases have exhibited extended life and clean burning.

While the lamp 10 illustrated is shown as being double ended, this is exemplary only; and other configurations, such as single ended, are to be understood as being able to employ the invention.

While there has been shown and described what are at present considered to be the preferred embodiments of the invention, it will be apparent to those skilled in the art that various changes and modifications can be made herein without departing from the scope of the invention as defined by the appended claims.

## Claims

1. A sealed incandescent lamp containing a tungsten filament and a fill gas, said fill gas comprising: gaseous hydrogen fluoride (HF) in an amount of from about 0.1 to 2.0 mole percent; gaseous nitrogen (N$_2$) in an amount of from about 2 to 4 mole percent; gaseous hydrogen (H$_2$) in an amount of greater than zero (>0) to 2 mole percent; and the balance selected from the group of argon (Ar) and krypton (Kr).

2. The lamp of Claim 1 wherein said fill gas includes an amount of greater than zero (>0) to 0.2 mole percent phosphine (PH$_3$).

## Patentansprüche

1. Abgedichtete Glühlampe mit einem Wolfram-Glühfaden und einer Gasfüllung, wobei die Gasfüllung umfaßt: gasförmiges Hydrogenfluorid (HF) in einer Menge von etwa 0,1 bis 2,0 Molprozent, gasförmigen Stickstoff (N$_2$) in einer Menge von etwa 2 bis 4 Molprozent, gasförmigen Wasserstoff (H$_2$) in einer Menge von größer als 0 (>0) bis 2 Molprozent, und den aus der Gruppe von Argon (Ar) und Krypton (Kr) ausgewählten Rest.

2. Lampe nach Anspruch 1, wobei die Gasfüllung eine Menge von größer als 0 (>0) bis 0,2 Molprozent Phosphin (PH$_3$) enthält.

## Revendications

1. Lampe à incandescence scellée contenant un filament au tungstène et un gaz de remplissage, le dit gaz de remplissage comprenant de 0,1 à 2,0% environ en mole de fluorure d'hydrogène gazeux (HF), de 2 à 4% environ en mole d'azote gazeux (N$_2$), de plus de zero (>0) à 2% en mole d'ydrogène gzeux (H$_2$), et le reste étant choisi dans le groupe comprenant l'argon (Ar) et le krypton (Kr).

2. Lampe selon la revendication 1 caractérisée en ce que le dit gaz de remplissage comprend de plus de zro (>0) à 0,2% en mole de phosphine (PH$_3$).

EP 0 167 176 B1

1